**Europäisches Patentamt**

**European Patent Office**

**Office européen des brevets**

(19)

(11) **EP 0 715 882 B1**

(12) **EUROPÄISCHE PATENTSCHRIFT**

(45) Veröffentlichungstag und Bekanntmachung des Hinweises auf die Patenterteilung:
**25.02.1998 Patentblatt 1998/09**

(51) Int. Cl.⁶: **B01F 7/04**

(21) Anmeldenummer: **95118357.3**

(22) Anmeldetag: **22.11.1995**

(54) **Selbstreinigender Reaktor/Mischer für hochviskoses und feststoffhaltiges Mischgut**

Self-cleaning reactor/mixer for high viscosity mixtures containing solids

Réacteur-mélangeur autonettoyant pour des mélanges à haute viscosité contenant des matières solides

(84) Benannte Vertragsstaaten:
**BE CH DE FR GB IT LI NL**

(30) Priorität: **05.12.1994 DE 4443154**
**21.07.1995 DE 19526654**

(43) Veröffentlichungstag der Anmeldung:
**12.06.1996 Patentblatt 1996/24**

(73) Patentinhaber: **BAYER AG**
**51368 Leverkusen (DE)**

(72) Erfinder:
- **Schebesta, Klaus**
  **D-51371 Leverkusen (DE)**
- **Schuchardt, Heinrich**
  **D-51373 Leverkusen (DE)**
- **Ullrich, Martin**
  **D-51375 Leverkusen (DE)**

(56) Entgegenhaltungen:
EP-A- 0 460 466        EP-A- 0 528 210
EP-A- 0 638 354

**Beschreibung**

Die Erfindung betrifft einen selbstreinigenden Reaktor/Mischer, insbesondere Scheibenreaktor, mit großem freien nutzbaren Volumen, der sich kinematisch selbst reinigt, bestehend wenigstens aus zwei oder mehreren parallelen gleichsinnig rotierenden Wellen, auf denen sich axial versetzte, nicht notwendigerweise kreisförmige Scheiben mit auf ihrem Umfang verteilten Abstreifern befinden, und einem umschließenden Gehäuse.

Der Mischer dient zur verfahrenstechnischen Behandlung von Fluiden und kohäsiven Schüttgütern. Der Mischer ist weitgehend kinematisch selbstreinigend und weist ein großes freies Nutzvolumen auf.

Unter anderem bei der Erzeugung und Verarbeitung von Kunststoffen und Kautschuk müssen hochviskose Flüssigkeiten verfahrenstechnisch behandelt werden. Insbesondere werden Apparate zum Mischen, Ausdampfen und Reagieren benötigt. Diese müssen eine gute Mischwirkung und im Falle der Ausdampfung auch eine schnelle Erneuerung der freien Oberflächen ermöglichen.

Produktablagerungen an den Wänden solcher Mischer z.B. bei Polymerisationsreaktionen können zu Verfahrensbeeinträchtigungen führen. In den Ablagerungen werden unerwünschte Nebenreaktionen aufgrund der wesentlich verlängerten Verweilzeit begünstigt. Dies führt zur Verunreinigung des Produktes. Produktablagerungen an den Wänden können durch kinematische Selbstreinigung des Mischers vermieden werden.

Im Hinblick auf die Minimierung der Apparatekosten ist dabei ein möglichst großes freies Volumen für das Mischgut anzustreben.

Eine bekannte Lösung des geschilderten Problems ist mit Hilfe von mehrachsigen Scheibenreaktoren möglich. Der prinzipielle Aufbau eines solchen Reaktors wird u.a. beschrieben in der Schrift FR-A-1 197 720.

In der Europäischen Anmeldeschrift EP 0 460 466 A1 wird beschrieben, wie die Abstreifer eines Scheibenreaktors bei gegen- oder gleichsinniger Rotation gestaltet \verden können, um eine kinematische Reinigung der Abstreifer und eine weitgehende Reinigung des kompletten Reaktors zu erreichen.

In der Deutschen Offenlegungsschrift DE 41 26 425 A1 wird ein Reaktor mit gegensinnig rotierenden Wellen beschrieben, der vollständig kinematisch selbstreinigend ist.

In der Schrift JP-A-63 232 828 wird gemäß dem einleitenden Teil des Anspruchs 1 ein gleichsinnig rotierender Reaktor als Beispiel dargestellt, der vollständig selbstreinigend ist, jedoch auf ein freies nutzbares Füllvolumen von kleiner 62 % begrenzt ist.

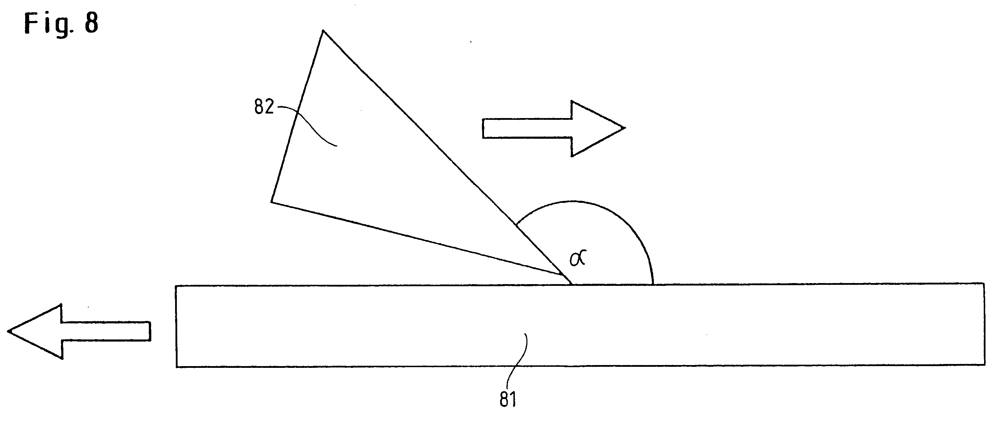

Allen drei letztgenannten Mischern ist gemeinsam, daß beim Abstreifen der Gehäusewand ein produktseitiger Winkel (siehe auch Fig. 8) kleiner als 60° zwischen Gehäusewand und Abstreiferoberfläche besteht. Für die Behandlung feststoffhaltiger bzw. extrem hochviskoser Mischgüter sind solche Mischer jedoch schlecht bzw. gar nicht geeignet, da es rasch zu einer Verdichtung und Verpressung des Mischgutes bzw. Feststoffes zwischen Gehäusewand und Abstreifer mit nachfolgendem Blockieren des Rotors kommt.

Aufgabe der Erfindung war es einen Reaktor/Mischer zu finden, der die Vorteile der bekannten Mischer - einen möglichst hohen Grad an Selbstreinigung und ein möglichst hohes nutzbares Volumen für das Mischgut - aufweist und zugleich geeignet ist, feststoffhaltiges Mischgut ohne Schwierigkeiten zu mischen.

Die Aufgabe wird erfindungsgemäß gelöst durch einen Reaktor/Mischer bestehend aus zwei oder mehr parallelen gleichsinnig rotierenden Wellen, auf denen sich axial versetzte Scheiben mit nicht notwendigerweise kreisförmigem Umfang befinden, mit auf ihrem Umfang verteilten Abstreifern und einem umschließenden Gehäuse. Dieser Reaktor/Mischer ist dadurch gekennzeichnet,

daß alle Oberflächen der Abstreifer kinematisch gereinigt werden,
daß insbesondere bei gleichschnell rotierenden Wellen in einem beliebigen Radialschnitt durch den Mischer alle nach außen weisenden Flächen der Abstreifer eine Welle, falls sie vom Gehäuse gereinigt werden, konzentrisch zum Rotationsmittelpunkt sind, anderenfalls jedoch in etwa den Achsabstand als Krümmungsradius aufweisen und konvex sind und von einer benachbarten Welle oder deren Abstreifern gereinigt werden,
daß insbesondere bei gleichschnell rotierenden Rotoren alle nach innen weisenden Flächen der Abstreifer einer Welle in einem beliebigen Radialschnitt durch den Mischer in etwa den Achsabstand als Krümmungsradius aufweisen und konkav sind und von Abstreifern einer anderen benachbarten Welle gereinigt werden,
daß bei der Reinigung des Gehäuses durch die Abstreifer zwischen Gehäusewand und der reinigenden Fläche des Abstreifers nur produktseitige Winkel größer als 90° auftreten,
daß bei der gegenseitigen Reinigung der Abstreifer untereinander zwischen der gereinigten und der reinigenden Fläche der einander berührenden Abstreifer nur produktseitige Winkel größer als 60°, bevorzugt größer gleich 90°, auftreten.

Unter Reinigung wird hier die kleinstmögliche Annäherung der genannten Teile des Reaktors bei der Drehung der Rotoren verstanden, die bei Berücksichtigung der Fertigungstoleranzen erreicht werden kann, so daß die genannten Teile ohne Blockierung der Rotation der Achsen aneinander vorbeigleiten können.

Unter Rotor wird hier die jeweils zusammenhängende Einheit aus Welle, Scheiben und Abstreifern verstanden.

Gehäuse sowie Rotoren der erfindungsgemäßen Mischer können mit grundsätzlich bekannten Kühl- oder Heizeinrichtungen versehen werden um z.B. den Reaktionsablauf innerhalb des Reaktors/Mischers beeinflussen zu können. Am Gehäuse können Stutzen für Ausgasungsableitungen bzw. Mischgutzu- und -ableitungen sowie für Meßgeräteankopplung vorgesehen sein.

Die erfindungsgemäßen hier beschriebenen Mischereinbauten (Rotoren) können in beliebiger Kombination mit an sich bekannten Misch-, Knet- bzw. Schneckenelementen und anderen Förderelementen kombiniert werden.

Eine geeignete Auswahl der Anordnung der Abstreifer ist nicht trivial. Vielmehr sind je nach Drehzahlverhältnis, dem Verhältnis von Durchmesser zu Achsabstand oder der Anzahl der Abstreifer bevorzugte Lösungen möglich.

Im weiteren werden bevorzugte erfindungsgemäße zweiachsige Mischer beschrieben, in denen alle Abstreifer in einem Radialschnitt kongruent sind und deren Rotoren gleichschnell, gleichsinnig rotieren.

Ausgehend von dieser Beschreibung ist die Erweiterung auf drei und mehrachsige Mischer durch Hinzufügung weiterer Wellen möglich. Bei zweiachsigen Mischern gibt es zwei grundsätzlich mögliche bevorzugte geometrische Anordnungen:

1. Die Abstreifer des einen Rotors lassen sich geometrisch auf die des anderen Rotors durch eine Verschiebung kongruent abbilden.
2. Die Abstreifer des einen Rotors lassen sich geometrisch auf die des anderen Rotors durch eine Verschiebung zuzüglich einer Drehung um den halben Teilwinkel kongruent abbilden.

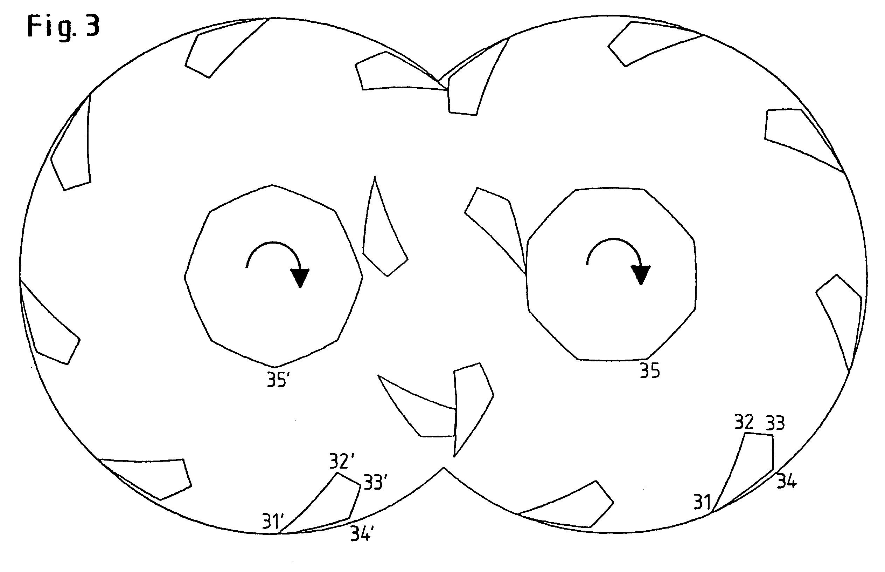

In Abhängigkeit von der Anzahl der Abstreifer sind bei einem bestimmten Verhältnis von Gehäuseradius zu Achsabstand geeignete erfindungsgemäße Lösungen möglich. In der nachstehenden Tabelle sind nur die Lösungen mit einem Verhältnis zwischen Gehäuseradius und Achsabstand größer als 0,7 behandelt, da Reaktoren/Mischer mit einem möglichst großen freien Volumen bevorzugter Erfindungsgegenstand sind. Bei den durch Fettdruck hervorgehobenen Wertebereichen für das Verhältnis von Gehäuseradius zu Achsabstand treten bis auf die Reinigung einer Fläche (z.B. 31 bis 34 in Fig. 3) des Abstreifers durch die Welle nur stumpfe produktseitige Winkel $\alpha$ (größer 90°) bei der gegenseitigen Reinigung der Abstreifer auf. Bei den in Klammern gesetzten Wertebereichen ist die Reinigung der Scheibenstirnflächen unter Umständen unvollständig.

Die nicht in Klammern stehenden Wertebereiche sind diesen gegenüber bevorzugt.

Unter produktseitigem Winkel $\alpha$ wird hier der Winkel zwischen Mischerflächen verstanden, der sich an der Abstreiferkante zwischen Abstreiferfläche und zu reinigender Fläche in Bewegungsrichtung des Abstreifers öffnet (siehe Fig. 8).

Weitere bevorzugte Ausführungsformen des erfindungsgemäßen Reaktor/Mischers sind den Unteransprüchen zu entnehmen.

Die Tabellen 1 und 2 zeigen Vorzugsbereiche des Verhältnis von Gehäuseinnenradius zum Achsabstand der Rotationsachsen.

Tabelle 1

| Die Abstreifer einer Welle sind auf die der anderen durch eine Verschiebung kongruent abbildbar. | | |
|---|---|---|
| Anzahl Schaber | Verhältnis von Außenradius zu Achsabstand | Verhältnis von Außenradius zu Achsabstand - Mischer mit produktseitigen Winkeln bei der Reinigung der Abstreifer untereinander von stets ≥90° - |
| 4 | | (0,708-1,000) |
| 5 | 0,700-0,703 | (0,851-1,000) |
| 6 | (0,700-0,816), 0,722-0,816 | |
| 7 | (0,700-0,924), 0,811-0,924 | |
| 8 | | (0,708-1,000), 0,904-1,000 |
| 9 | 0,700-0,722 | (0,778-1,000) |
| 10 | (0,700-0,786), 0,713-0,786 | (0,851-1,000) |
| 11 | (0,700-0,849), 0,768-0,849 | (0,925-1,000) |
| 12 | | (0,708-0,913), 0,824-0,913 |
| 13 | 0,700-0,724 | (0,755-0,976), 0,882-0,976 |
| 14 | (0,700-0,768), 0,710-0,768 | (0,802-1,000), 0,941-1,000 |
| 15 | (0,700-0,813), 0,750-0,813 | (0,851-1,000) |
| 16 | | (0,708-0,858), 0,790-0,858, (0,900-1000) |
| 17 | 0,700-0,723 | (0,743-0,903), 0,831-0,903, (0,950-1,000) |
| 18 | (0,700-0,757), 0,709-0,757 | (0,778-0,948), 0,873-0,948, |
| 19 | (0,700-0,791), 0,740-0,791 | (0,815-0,993), 0,915-0,993 |
| 20 | | (0,708-0,826), 0,771-0,826, (0,851-1,000),0,958-1,000 |

Tabelle 2

| Die Abstreifer einer Welle sind auf die des anderen durch eine Verschiebung und anschließend die Drehung um den halben Teilwinkel kongruent abbildbar. | | |
| --- | --- | --- |
| Anzahl Schaber | Verhältnis von Außenradius zu Achsabstand | Verhältnis von Außenradius zu Achsabstand - Mischer mit produktseitigen Winkeln bei der Reinigung der Abstreifer untereinander von stets ≥90° - |
| 4 | (0,700-0,840) 0,741-0,840 | |
| 5 | (0,700-1,000), 0,864-1,000 | |
| 6 | | (0,708-1,000) |
| 7 | 0,700-0,717 | (0,802-1,000) |
| 8 | (0,700-0,798) 0,716-0,798 | (0,900-1,000) |
| 9 | (0,700-0,879), 0,784-0,879 | |
| 10 | | (0,708-0,958), 0,854-0,958 |
| 11 | 0,700-0,724 | (0,764-1,000), 0,927-1,000 |
| 12 | (0,700-0,776) 0,711-0,776 | (0,822-1,000) |
| 13 | (0,700-0,829), 0,757-0,829 | (0,881-1,000) |
| 14 | | (0,708-0,881), 0,804-0,881,(0,940-1,000) |
| 15 | 0,700-0,724 | (0,748-0,934), 0,853-0,934, |
| 16 | (0,700-0,762), 0,710-0,762 | (0,789-0,987), 0,901-0,987 |
| 17 | (0,700-0,801), 0,744-0,801 | (0,830-1,000), 0,951-1,000 |
| 18 | | (0,708-0,840), 0,780-0,840,(0,872-1,000) |
| 19 | 0,700-0,723 | (0,739-0,879), 0,816-0,879, (0,915-1,000) |
| 20 | (0,700-0,753) 0,709-0,753 | (0,770-0,918), 0,852-0,918,(0,957-1,000) |

Nachstehend wird die Erfindung anhand der Figuren beispielhaft näher erläutert. Es zeigen:

Fig. 1      Prinzipieller Aufbau eines bekannten zweiwelligen Scheibenreaktors als Schnitt in Seitenansicht (Fig. 1a), im Aufsicht (Fig. 1b) und Querschnitt (Fig. 1c)

Fig. 2      Perspektivische Ansicht zweier Rotoren einer Ausführungsform eines erfindungsgemäßen Scheibenreaktors ohne Darstellung des Gehäuse

Fig. 3      Radialschnitt entsprechend einem Schnitt A-B aus Fig. 1 durch einen Scheibenreaktor mit den in Fig. 2 dargestellten Rotoren

Fig. 4      Darstellung der Relativbewegung eines Abstreifers 41-42-43-44 des einen Rotors eines Scheibenreaktors wie in Fig. 3 bezüglich eines anderen Rotors in Momentaufnahmen

Fig. 5      Darstellung der Relativbewegung aller Abstreifer eines Rotors bezüglich eines anderen Rotors eines Scheibenreaktors wie in Fig. 3 in Momentaufnahmen

Fig. 6      Perspektivische Ansicht zweier Rotoren einer weiteren Ausführungsform eines erfindungsgemäßen Scheibenreaktors ohne Darstellung des Gehäuses

Fig. 7      Radialschnitt entsprechend einen Schnitt A-B aus Fig. 1 durch einen erfindungsgemäßen Scheibenreaktor mit den in Fig. 6 dargestellten Rotoren

Fig. 8      dient zur Erläuterung des Begriffes des produktseitigen Winkels $\alpha$.

## Beispiele

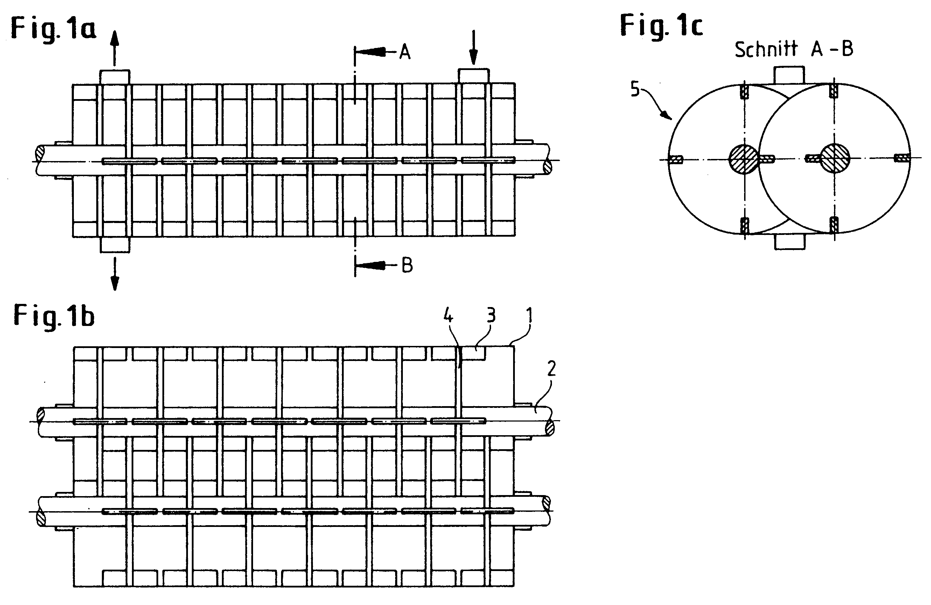

In Fig. 1 ist der Grundaufbau eines bekannten mehrwelligen Scheibenreaktors gezeigt (vgl. z.B. Patentschrift FR-A-1 197 720).

Für das Verständnis der Kinematik sind Radialschnitte durch die Abstreifelemente des erfindungsgemäßen Mischers ausschlaggebend. Entsprechend ist in den Figuren 3-5 und 7 jeweils ein Schnitt vergleichbar einem Schnitt A-B aus Fig. 1 dargestellt.

## Beispiel 1

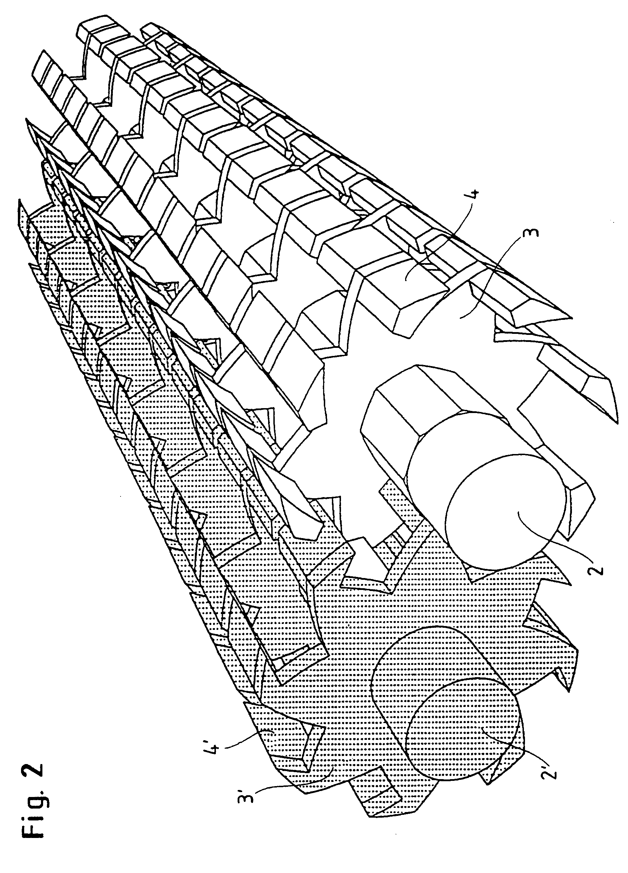

Figur 2 zeigt eine perspektivische Ansicht der Wellen (2, 2'), Scheiben (3, 3'), Abstreifer (4, 4') eines erfindungsgemäßen Scheibenreaktors. Dieser weist ein Verhältnis vom Gehäuseinnenradius zum Achsabstand (Rotationsachsen) von 0,75 auf. Die Anordnung der Abstreifer (4, 4') ist 8fach rotationssymmetrisch. Entsprechend der obenstehenden Tabelle ist eine weitgehende Abreinigung der Stirnseiten der Scheiben 3, 3' nur möglich, wenn die Abstreifer 4 der einen Welle 2 durch geometrisches Verschieben der Abstreifer 4' der anderen Welle 2' zuzüglich einer Drehung um den halben Teilwinkel (hier 22,5°) entstehen.

Figur 3 zeigt einen Radialschnitt entsprechend einem Schnitt A-B aus Fig. 1 durch den erfindungsgemäßen Scheibenreaktor mit den in Fig. 2 dargestellten Wellen (2, 2') und Abstreifer (4, 4'). Die Wellen 2, 2' drehen sich in Richtung der Kanten 31, 31' der Abstreifer 4 bzw. 4'.

Bei der gegenseitigen Reinigung der Abstreifer untereinander und des Gehäuses durch die Abstreifer treten folgende produktseitige Winkel auf.

| | | |
|---|---|---|
| Kanten 31 reinigen | Gehäuse 1: | 143°. |
| Kanten 31 reinigen | Welle 2': | 137°-149°. |
| Kanten 31 reinigen | Abstreiferflächen | 32'-33': 144°-149°. |
| Kanten 31 reinigen | Abstreiferflächen | 33'-34': 96°-102°. |
| Kanten 32 reinigen | Abstreiferflächen | 31'-32': 68°-82°. |
| Kanten 35 reinigen | Abstreiferflächen | 31'-34': 0°-12°. |
| Kanten 31' reinigen | Gehäuse 1: | 143°. |
| Kanten 31' reinigen | Welle 2: | 137°-149°. |
| Kanten 31' reinigen | Abstreiferflächen | 32-33: 144°-149°. |
| Kanten 31' reinigen | Abstreiferflächen | 33-34: 96°-102°. |
| Kanten 32' reinigen | Abstreiferflächen | 31-32: 68°-82°. |
| Kanten 35' reinigen | Abstreiferflächen | 31-34: 0°-12°. |

Bei der Reinigung der Abstreiferflächen 31-34 durch die Welle tritt ein spitzer produktseitiger Winkel auf. Bei der Reinigung der Flächen 31-32 tritt ein Winkel größer 60° auf. Alle anderen produktseitigen Winkel bei der Reinigung sind größer gleich 90°.

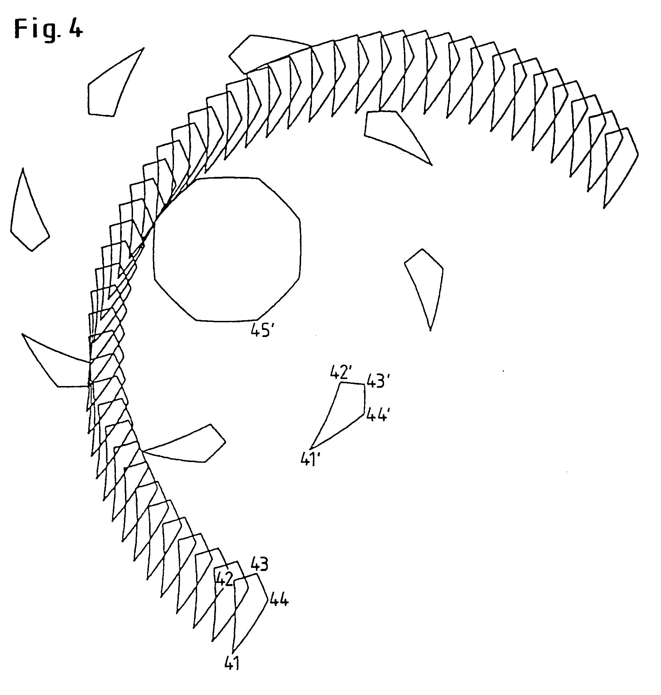

Figur 4 zeigt die Relativbewegung eines Abstreifers 41-42-43-44 des einen Rotors eines Scheibenreaktors wie in Fig. 3 in einem Radialschnitt bezüglich eines anderen Rotors in Momentaufnahmen. Hierbei wird das Vorbeigleiten der Abstreiferkanten an zu reinigenden Flächen deutlich.

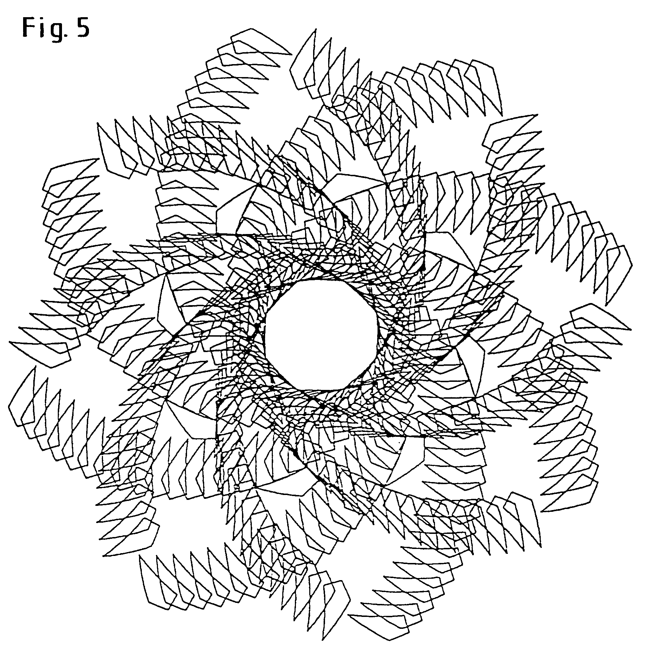

In Figur 5 wird ersichtlich, daß die Stirnflächen der Scheiben 2 (bzw. 2') weitgehend abgereinigt werden, da die Relativbewegung aller Abstreifer eines Rotors über eine Scheibenstirnfläche wiedergegeben ist.

## Beispiel 2

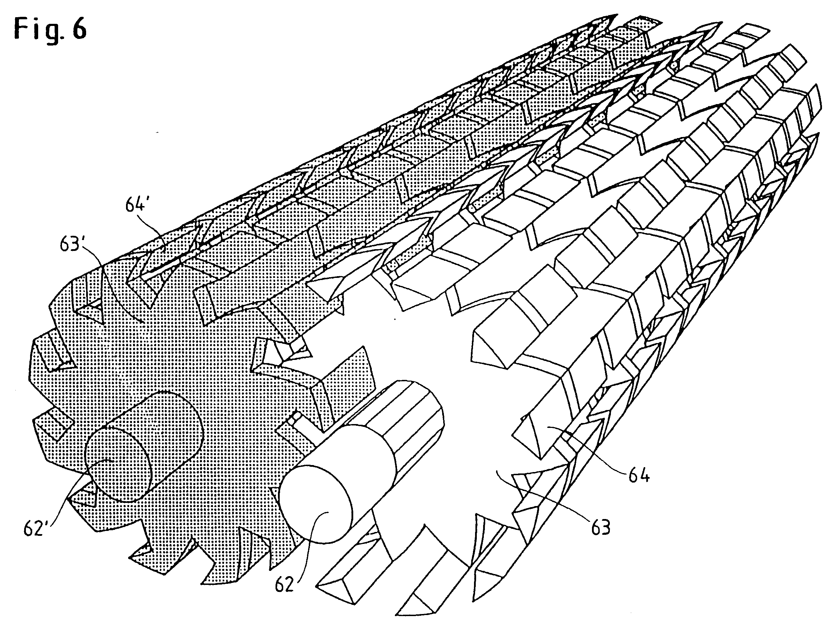

Figur 6 zeigt eine perspektivische Ansicht der Wellen (62, 62'), Scheiben (63, 63'), Abstreifer (64, 64') einer weiteren Ausführungsform des erfindungsgemäßen Scheibenreaktors. Dieser weist ein Verhältnis von Gehäuseinnenradius zum Achsabstand (der Rotationsachsen) von 0,824 auf. Jeder Rotor ist 12fach rotationssymmetrisch. Entsprechend der obenstehenden Tabelle ist eine weitgehende Reinigung der Stirnseiten der Scheiben 63 möglich, wenn die Abstreifer 64 der einen Welle 2 durch Verschieben der Abstreifer 64' der anderen Welle 2' geometrisch entstehen.

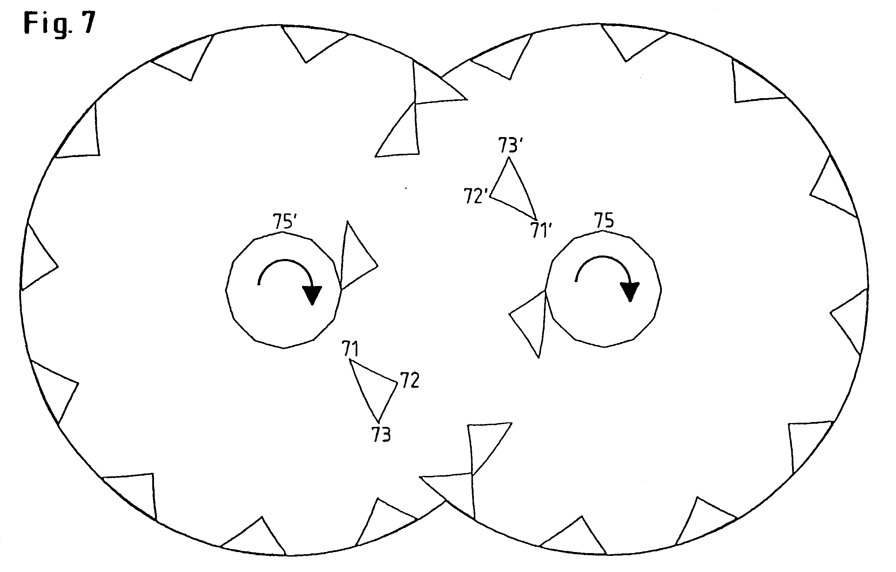

Figur 7 zeigt einen Radialschnitt vergleichbar einem Schnitt A-B aus Fig. 1 durch einen Scheibenreaktor mit den in Fig. 6 dargestellten Wellen (62, 62') und Abstreifern (64, 64').

Bei der gegenseitigen Reinigung der Abstreifer untereinander und des Gehäuses durch die Abstreifer treten folgende produktseitige Winkel auf.

6

| Kanten 71 reinigen | Gehäuse 1: | 136°. |
| Kanten 71 reinigen | Welle 2': | 133°-138°. |
| Kanten 71 reinigen | Abstreiferflächen 72'-73': | 130°-138°. |
| Kanten 72 reinigen | Abstreiferflächen 71'-72': | 90°-100°. |
| Kanten 75 reinigen | Abstreiferflächen 71'-73': | 0°-5°. |
| Kanten 71' reinigen | Gehäuse 1: | 136°. |
| Kanten 71' reinigen | Welle 2: | 133°-138°. |
| Kanten 71' reinigen | Abstreiferflächen 72-73: | 130°-138°. |
| Kanten 72' reinigen | Abstreiferflächen 71-72: | 90°-100°. |
| Kanten 75' reinigen | Abstreiferflächen 71-73: | 0°-5°. |

Bei der Reinigung der Abstreiferflächen 71-73 durch die Welle tritt ein spitzer produktseitiger Winkel auf. Alle anderen produktseitigen Winkel bei der Reinigung sind größer gleich 90°.

**Patentansprüche**

1.  Reaktor/Mischer bestehend aus zwei oder mehr parallelen gleichsinnig rotierenden Wellen (2, 2'), auf denen sich axial versetzte Scheiben (3, 3') mit nicht notwendigerweise kreisförmigem Umfang mit auf ihrem Umfang verteilten Abstreifern (4, 4') befinden und einem umschließenden Gehäuse (1), dadurch gekennzeichnet,

    daß alle Oberflächen der Abstreifer (4, 4') kinematisch gereinigt werden,
    daß alle nach außen weisenden Flächen der Abstreifer (4) einer Welle (2) in einem beliebigen Radialschnitt durch den Mischer konvex sind und von einer benachbarten Welle (2') oder deren Abstreifern (4') oder vom Gehäuse (1) gereinigt werden,
    daß alle nach innen weisenden Flächen der Abstreifer (4) einer Welle (2) in einem beliebigen Radialschnitt durch den Mischer konkav sind und von Abstreifern (4') einer benachbarten Welle (2') gereinigt werden,
    daß bei der Reinigung des Gehäuses (1) durch die Abstreifer (4, 4') zwischen Gehäusewand und der reinigenden Fläche des Abstreifers (4, 4') nur produktseitige Winkel größer als 90° auftreten,
    daß bei der gegenseitigen Reinigung der Abstreifer (4, 4') untereinander zwischen der gereinigten und der reinigenden Flächen der einander berührenden Abstreifer (4, 4') nur produktseitige Winkel größer als 60°, bevorzugt größer gleich 90°, auftreten.

2.  Reaktor/Mischer gemäß Anspruch 1, dadurch gekennzeichnet, daß die Abstreifer einer jeden Welle (2, 2') rotationssymmetrisch angeordnet sind, und daß bei der langsamer oder gleichschnell rotierenden Welle die Abstreifer n-fach rotationssymmetrisch angeordnet sind, wobei n eine Zahl größer als 3 bedeutet.

3.  Reaktor/Mischer gemäß Anspruch 2, dadurch gekennzeichnet, daß die Abstreifer der langsamer oder gleichschnell rotierenden Welle n-fach rotationssymmetrisch angeordnet sind, wobei n eine Zahl größer als 5 bedeutet.

4.  Reaktor/Mischer gemäß den Ansprüchen 1 bis 2, dadurch gekennzeichnet,

    daß die Wellen (2, 2') gleichschnell rotieren,

    daß in einem beliebigen Radialschnitt durch den Mischer alle nach außen weisenden Flächen der Abstreifer (4) einer Welle (2), falls sie vom Gehäuse (1) gereinigt werden, konzentrisch zum Rotationsmittelpunkt sind, anderenfalls jedoch den Achsabstand als Krümmungsradius aufweisen und konvex sind und von einer benachbarten Welle (2') oder deren Abstreifern gereinigt werden,

daß in einem beliebigen Radialschnitt alle nach innen weisenden Flächen der Abstreifer (4) eines Rotors (5) den Achsabstand (der Rotationsachsen) als Krümmungsradius aufweisen und konkav sind und von Abstreifern (4') eine benachbarten Welle (2') gereinigt werden.

5. Reaktor/Mischer gemäß Anspruch 4, dadurch gekennzeichnet, daß in einem Radialschnitt durch den Mischer alle Abstreifer (4, 4') kongruente, d.h. deckungsgleich aufeinander abbildbare Querschnitte aufweisen und daß in jedem Radialschnitt die Anzahl der Abstreifer (4 bzw. 4') einer Welle (2, 2') gleich dem Grad der Rotationssymmetrie ihrer Anordnung ist.

6. Reaktor/Mischer gemäß Anspruch 5, dadurch gekennzeichnet, daß in einem Radialschnitt die Abstreifer (4) einer Welle (2) auf die Abstreifer (4') einer benachbarten Welle (2') durch eine Verschiebung geometrisch abbildbar sind.

7. Vorrichtung gemäß Anspruch 5, dadurch gekennzeichnet, daß in einem Radialschnitt die Abstreifer (4) einer Welle (2) auf die Abstreifer (4') einer benachbarten Welle (2') durch eine Verschiebung mit anschließender Drehung um den halben Teilwinkel

$$\varphi_{\frac{t}{2}} = \frac{180°}{n}$$

geometrisch abbildbar sind, wobei n den Grad der Rotationssymmetrie bedeutet.

8. Reaktor/Mischer gemäß den Anspruch 6, dadurch gekennzeichnet, daß das Verhältnis von Gehäuseinnenradius zu Achsabstand der Rotationsachsen in Abhängigkeit von der Anzahl der Abstreifer (4 bzw. 4') einer Welle (2 bzw. 2') in einem Radialschnitt wie folgt gewählt wird.

| Anzahl der Abstreifer | Verhältnis von Gehäuseinnenradius zu Achsabstand |
|---|---|
| 4 | 0,708- 1,000, |
| 5 | 0,700-0,703 oder 0,851-1,000, |
| 6 | 0,700-0,816, |
| 7 | 0,700-0,924, |
| 8 | 0,708-1,000, |
| 9 | 0,700-0,722 oder 0,778-1,000, |
| 10 | 0,700-0,786 oder 0,851-1,000, |
| 11 | 0,700-0,849 oder, 0,925-1,000, |
| 12 | 0,708-0,913, |
| 13 | 0,700-0,724 oder 0,755-0,976, |
| 14 | 0,700-0,768 oder 0,802-1,000, |
| 15 | 0,700-0,813 oder 0,851-1,000, |
| 16 | 0,708-0,858 oder 0,900-1,000, |
| 17 | 0,700-0,723 oder 0,743-0,903 oder 0,950-1,000, |
| 18 | 0,700-0,757 oder 0,778-0,948, |
| 19 | 0,700-0,791 oder 0,815-0,993, |
| 20 | 0,708-0,826 oder 0,851-1,000. |

9. Reaktor/Mischer gemäß den Anspruch 6, dadurch gekennzeichnet, daß das Verhältnis von Gehäuseinnenradius zu Achsabstand der Rotationsachsen in Abhängigkeit von der Zahl der Abstreifer (4 bzw 4') einer Welle (2 bzw. 2') in einem Radialschnitt wie folgt gewählt wird:

| Anzahl der Abstreifer | Verhältnis von Gehäuseinnenradius zu Achsabstand |
|---|---|
| 5 | 0,700-0,703, |
| 6 | 0,722-0,816, |
| 7 | 0,811-0,924, |
| 8 | 0,904-1,000, |
| 9 | 0,700-0,722, |
| 10 | 0,713-0,786, |
| 11 | 0,768-0,849, |
| 12 | 0,824-0,913, |
| 13 | 0,700-0,724 oder 0,882-0,976, |
| 14 | 0,710-0,768 oder 0,941-1,000, |
| 15 | 0,750-0,813, |
| 16 | 0,790-0,858, |
| 17 | 0,700-0,723 oder 0,831-0,903, |
| 18 | 0,709-0,757 oder 0,873-0,948, |
| 19 | 0,740-0,791 oder 0,915-0,993, |
| 20 | 0,771-0,826 oder 0,958-1,000. |

10. Reaktor/Mischer gemäß den Anspruch 6, dadurch gekennzeichnet, daß das Verhältnis von Gehäuseinnenradius zu Achsabstand der Rotationsachsen in Abhängigkeit von der Anzahl der Abstreifer (4 bzw. 4') einer Welle (2 bzw. 2') in einem Radialschnitt wie folgt gewählt wird:

| Anzahl der Abstreifer | Verhältnis von Gehäuseinnenradius zu Achsabstand |
|---|---|
| 8 | 0,904-1,000, |
| 12 | 0,824-0,913, |
| 13 | 0,882-0,976, |
| 14 | 0,941-1,000, |
| 16 | 0,790-0,858, |
| 17 | 0,831-0,903, |
| 18 | 0,873-0,948, |
| 19 | 0,915-0,993, |
| 20 | 0,771-0,826 oder 0,958-1,000. |

11. Reaktor/Mischer gemäß den Anspruch 7, dadurch gekennzeichnet, daß das Verhältnis von Gehäuseinnenradius zu Achsabstand der Rotationsachsen in Abhängigkeit von der Anzahl der Abstreifer (4 bzw. 4') einer Welle (2 bzw. 2') in einem Radialschnitt wie folgt gewählt wird:

| Anzahl der Abstreifer | Verhältnis von Gehäuseinnenradius zu Achsabstand |
|---|---|
| 4 | 0,700-0,840, |
| 5 | 0,700-1,000, |
| 6 | 0,708-1,000, |
| 7 | 0,700-0,717 oder 0,802-1,000, |
| 8 | 0,700-0,798 oder 0,900-1,000, |
| 9 | 0,700-0,879, |
| 10 | 0,708-0,958, |
| 11 | 0,700-0,724 oder 0,764-1,000, |
| 12 | 0,700-0,776 oder 0,822-1,000, |
| 13 | 0,700-0,829 oder 0,881-1,000, |
| 14 | 0,708-0,881 oder 0,940-1,000, |
| 15 | 0,700-0,724 oder 0,748-0,934, |
| 16 | 0,700-0,762 oder 0,789-0,987, |
| 17 | 0,700-0,801 oder 0,830-1,000, |
| 18 | 0,708-0,840 oder 0,872-1,000, |
| 19 | 0,700-0,723 oder 0,739-0,879 oder 0,915-1,000, |
| 20 | 0,700-0,753 oder 0,770-0,918 oder 0,957-1,000. |

12. Reaktor/Mischer gemäß den Anspruch 7, dadurch gekennzeichnet, daß das Verhältnis von Gehäuseinnenradius zum Achsabstand der Rotationsachsen in Abhängigkeit von der Anzahl der Abstreifer (4 bzw. 4') einer Welle (2 bzw. 2') in einem Radialschnitt wie folgt gewählt wird:

# EP 0 715 882 B1

| Anzahl der Abstreifer | Verhältnis von Gehäuseinnenradius zum Achsabstand |
|---|---|
| 4 | 0,741-0,840, |
| 5 | 0,864-1,000, |
| 7 | 0,700-0,717, |
| 8 | 0,716-0,798, |
| 9 | 0,784-0,879, |
| 10 | 0,854-0,958, |
| 11 | 0,700-0,724 oder 0,927-1,000, |
| 12 | 0,711-0,776, |
| 13 | 0,757-0,829, |
| 14 | 0,804-0,881, |
| 15 | 0,700-0,724 oder 0,853-0,934, |
| 16 | 0,710-0,762 oder 0,901-0,987, |
| 17 | 0,744-0,802 oder 0,951-1,000, |
| 18 | 0,780-0,840, |
| 19 | 0,700-0,723 oder 0,816-0,879, |
| 20 | 0,709-0,753 oder 0,852-0,918. |

13. Reaktor/Mischer gemäß den Anspruch 7, dadurch gekennzeichnet, daß das Verhältnis von Gehäuseinnenradius zum Achsabstand der Rotationsachsen in Abhängigkeit von der Anzahl der Abstreifer (4 bzw. 4') einer Welle (2 bzw. 2') in einem Radialschnitt wie folgt gewählt wird:

| Anzahl der Abstreifer | Verhältnis von Gehäuseinnenradius zu Achsabstand |
|---|---|
| 10 | 0,854-0,958, |
| 11 | 0,927-1,000, |
| 14 | 0,804-0,881, |
| 15 | 0,853-0,934, |
| 16 | 0,901-0,987, |
| 17 | 0,951-1,000, |
| 18 | 0,780-0,840, |
| 19 | 0,816-0,879, |
| 20 | 0,852-0,918. |

## Claims

1. Reactor/mixer comprising two or more parallel shafts (2, 2') rotating in the same direction, on which axially offset disks (3, 3') with a not necessarily circular circumference and with scrapers (4, 4') distributed on their circumference are situated, and a surrounding housing (1), characterized in

that all of the surfaces of the scrapers (4, 4') are kinematically cleaned,

that, in any radial section through the mixer, all of the outwardly directed surfaces of the scrapers (4) of a shaft (2) are convex and are cleaned by an adjacent shaft (2') or the scrapers (4') of said shaft or by the housing (1),

that, in any radial section through the mixer, all of the inwardly directed surfaces of the scrapers (4) of a shaft (2) are concave and are cleaned by scrapers (4') of an adjacent shaft (2'),

that, during cleaning of the housing (1) by the scrapers (4, 4'), only product-side angles greater than 90° arise between the housing wall and the cleaning surface of the scraper (4, 4'),

that, during mutual cleaning of the scrapers (4, 4'), only product-side angles greater than 60°, preferably greater than or equal to 90°, arise between the cleaned and the cleaning surfaces of the scrapers (4, 4') in contact with one another.

2. Reactor/mixer according to claim 1, characterized in that the scrapers of any one shaft (2, 2') are disposed in a rotationally symmetric manner, and that in the case of the shaft rotating more slowly or at the same speed the scrapers are disposed in an n-times rotationally symmetric manner, n being a number greater than 3.

3. Reactor/mixer according to claim 2, characterized in that the scrapers of the shaft rotating more slowly or at the same speed are disposed in an n-times rotationally symmetric manner, n being a number greater than 5.

4. Reactor/mixer according to claims 1 to 2,

   characterized in that the shafts (2, 2') rotate at the same speed,

   that, in any radial section through the mixer, all of the outwardly directed surfaces of the scrapers (4) of a shaft (2), if they are cleaned by the housing (1), are concentric with the centre of rotation but otherwise have the distance between axes as a radius of curvature and are convex and are cleaned by an adjacent shaft (2') or the scrapers of said shaft,

   that, in any radial section, all of the inwardly directed surfaces of the scrapes (4) of a rotor (5) have the distance between axes (axed of rotation) as a radius of curvature and are concave and are cleaned by scrapers (4') of an adjacent shaft (2').

5. Reactor/mixer according to claim 4, characterized in that in a radial section through the mixer all of the scrapers (4, 4') have congruent cross sections, i.e. cross sections congruently mappable one onto the other, and that in any radial section the number of scrapers (4, 4') of a shaft (2, 2') is equal to the degree of the rotational symmetry of their arrangement.

6. Reactor/mixer according to claim 5, characterized in that in a radial section the scrapers (4) of a shaft (2) are geometrically mappable onto the scrapers (4') of an adjacent shaft (2') through displacement.

7. Device according to claim 5, characterized in that in a radial section the scrapers (4) of a shaft (2) are geometrically mappable onto the scrapers (4') of an adjacent shaft (2') through displacement with subsequent rotation through half the angular pitch

$$\varphi_{\frac{t}{2}} = \frac{180°}{n},$$

in which n represents the degree of rotational symmetry.

8. Reactor/mixer according to claim 6, characterized in that the ratio of the housing inner radius to the distance between the axes of rotation is selected as a function of the number of scrapers (4 or 4') of a shaft (2 or 2') in a radial section as follows:

| Number of scrapers | Ratio of housing inner radius to distance between axes |
|---|---|
| 4 | 0.708-1.000, |
| 5 | 0.700-0.703 or 0.851-1.000, |
| 6 | 0.700-0.816, |
| 7 | 0.700-0.924, |
| 8 | 0.708-1.000, |
| 9 | 0.700-0.722 or 0.778-1.000, |
| 10 | 0.700-0.786 or 0.851-1.000, |
| 11 | 0.700-0.849 or 0.925-1.000, |
| 12 | 0.708-0.913, |
| 13 | 0.700-0.724 or 0.755-0.976, |
| 14 | 0.700-0.768 or 0.802-1.000, |
| 15 | 0.700-0.813 or 0.851-1.000, |
| 16 | 0.708-0.858 or 0.900-1.000, |
| 17 | 0.700-0.723 or 0.743-0.903 or 0.950-1.000, |
| 18 | 0.700-0.757 or 0.778-0.948, |
| 19 | 0.700-0.791 or 0.815-0.993, |
| 20 | 0.708-0.826 or 0.851-1.000. |

9. Reactor/mixer according to claim 6, characterized in that the ratio of the housing inner radius to the distance between the axes of rotation is selected as a function of the number of scrapers (4 or 4') of a shaft (2 or 2') in a radial section as follows:

| Number of scrapers | Ratio of housing inner radius to distance between axes |
|---|---|
| 5 | 0.700-0.703, |
| 6 | 0.722-0.816, |
| 7 | 0.811-0.924, |
| 8 | 0.904-1.000, |
| 9 | 0.700-0.722, |
| 10 | 0.713-0.786, |
| 11 | 0.768-0.849, |
| 12 | 0.824-0.913, |
| 13 | 0.700-0.724 or 0.882-0.976, |
| 14 | 0.710-0.786 or 0.941-1.000, |
| 15 | 0.750-0.813, |
| 16 | 0.790-0.858, |
| 17 | 0.700-0.723 or 0.831-0.903, |
| 18 | 0.709-0.757 or 0.873-0.948, |
| 19 | 0.740-0.791 or 0.915-0.993, |
| 20 | 0.771-0.826 or 0.958-1.000. |

10. Reactor/mixer according to claim 6, characterized in that the ratio of the housing inner radius to the distance between the axes of rotation is selected as a function of the number of scrapers (4 or 4') of a shaft (2 or 2') in a radial section as follows:

| Number of scrapers | Ratio of housing inner radius to distance between axes |
|---|---|
| 8 | 0.904-1.000, |
| 12 | 0.824-0.913, |
| 13 | 0.882-0.976, |
| 14 | 0.941-1.000, |
| 16 | 0.790-0.858, |
| 17 | 0.831-0.903, |
| 18 | 0.873-0.948, |
| 19 | 0.915-0.993, |
| 20 | 0.771-0.826 or 0.958-1.000. |

11. Reactor/mixer according to claim 7, characterized in that the ratio of the housing inner radius to the distance between the axes of rotation is selected as a function of the number of scrapers (4 or 4') of a shaft (2 or 2') in a radial section as follows:

| Number of scrapers | Ratio of housing inner radius to distance between axes |
|---|---|
| 4 | 0.700-0.840, |
| 5 | 0.700-1.000, |
| 6 | 0.708-1.000, |
| 7 | 0.700-0.717 or 0.802-1.000, |
| 8 | 0.700-0.798 or 0.900-1.000, |
| 9 | 0.700-0.879, |
| 10 | 0.708-0.958, |
| 11 | 0.700-0.724 or 0.764-1.000, |
| 12 | 0.700-0.776 or 0.822-1.000, |
| 13 | 0.700-0.829 or 0.881-1.000, |
| 14 | 0.708-0.881 or 0.940-1.000, |
| 15 | 0.700-0.724 or 0.748-0.934, |
| 16 | 0.700-0.762 or 0.789-0.987, |
| 17 | 0.700-0.801 or 0.830-1.000, |
| 18 | 0.708-0.840 or 0.872-1.000, |
| 19 | 0.700-0.723 or 0.739-0.879 or 0.915-1.000, |
| 20 | 0.700-0.753 or 0.770-0.918 or 0.957-1.000. |

12. Reactor/mixer according to claim 7, characterized in that the ratio of the housing inner radius to the distance between the axes of rotation is selected as a function of the number of scrapers (4 or 4') of a shaft (2 or 2') in a radial section as follows:

| Number of scrapers | Ratio of housing inner radius to distance between axes |
|---|---|
| 4 | 0.741-0.840, |
| 5 | 0.864-1.000, |
| 7 | 0.700-0.717, |
| 8 | 0.716-0.798, |
| 9 | 0.784-0.879, |
| 10 | 0.854-0.958, |
| 11 | 0.700-0.724 or 0.927-1.000, |
| 12 | 0.711-0.776, |
| 13 | 0.757-0.829, |
| 14 | 0.804-0.881, |
| 15 | 0.700-0.724 or 0.853-0.934, |
| 16 | 0.710-0.762 or 0.901-0.987, |
| 17 | 0.744-0.802 or 0.951-1.000, |
| 18 | 0.780-0.840, |
| 19 | 0.700-0.723 or 0.816-0.879, |
| 20 | 0.709-0.753 or 0.852-0.918. |

13. Reactor/mixer according to claim 7, characterized in that the ratio of the housing inner radius to the distance between the axes of rotation is selected as a function of the number of scrapers (4 or 4') of a shaft (2 or 2') in a radial section as follows:

| Number of scrapers | Ratio of housing inner radius to distance between axes |
|---|---|
| 10 | 0.854-0.958, |
| 11 | 0.927-1.000, |
| 14 | 0.804-0.881, |
| 15 | 0.853-0.934, |
| 16 | 0.901-0.987, |
| 17 | 0.951-1.000, |
| 18 | 0.780-0.840, |
| 19 | 0.816-0.879, |
| 20 | 0.852-0.918. |

## Revendications

1. Réacteur/mélangeur composé de deux ou plusieurs arbres (2, 2') parallèles tournant dans le même sens, sur lesquels se trouvent des disques (3, 3') décalés axialement, pas nécessairement circulaires, possédant des racleurs (4, 4') répartis à leur périphérie, et d'une enveloppe (1) entourant le tout, caractérisé

en ce que toutes les surfaces des racleurs (4, 4') sont nettoyées de manière cinématique,

en ce que, dans un plan de coupe radial quelconque à travers le mélangeur, toutes les surfaces orientées vers l'extérieur des racleurs (4) d'un arbre (2) sont convexes et sont nettoyées par un arbre voisin (2') ou ses racleurs (4') ou par l'enveloppe (1),

en ce que, dans un plan de coupe radial quelconque à travers le mélangeur, toutes les surfaces orientées vers l'intérieur des racleurs (4) d'un arbre (2) sont concaves et sont nettoyées par les racleurs (4') d'un arbre voisin (2'),

en ce que, lors du nettoyage de l'enveloppe (1) par les racleurs (4, 4'), seuls des angles supérieurs à 90° apparaissent du côté du produit entre la paroi de l'enveloppe et la face nettoyante du racleur (4, 4'),

en ce que, lors du nettoyage mutuel des racleurs (4, 4') entre eux, seuls des angles supérieurs à 60°, de préférence supérieurs ou égaux à 90°, apparaissent du côté du produit entre la face nettoyante et la face nettoyée des racleurs (4, 4') qui sont en contact mutuel.

2. Réacteur/mélangeur suivant la revendication 1, caractérisé en ce que les racleurs de chaque arbre (2, 2') sont disposés selon une symétrie de rotation, et en ce que pour l'arbre tournant plus lentement ou à la même vitesse les racleurs sont disposés selon une symétrie de rotation d'ordre n, n étant un nombre supérieur à 3.

3. Réacteur/mélangeur suivant la revendication 2, caractérisé en ce que les racleurs de l'arbre tournant plus lentement ou à la même vitesse sont disposés selon une symétrie de rotation d'ordre n, n étant un nombre supérieur à 5.

4. Réacteur/mélangeur suivant les revendications 1 à 2, caractérisé en ce que les arbres (2, 2') tournent à la même vitesse,

en ce que, dans un plan radial quelconque de coupe à travers le mélangeur, toutes les faces des racleurs (4) d'un arbre (2) orientées vers l'extérieur, si elles sont nettoyées par l'enveloppe (1), sont concentriques au centre de rotation, dans le cas contraire présentent cependant un rayon de courbure égal à l'entraxe et sont convexes et sont nettoyées par un arbre voisin (2') ou ses racleurs,

en ce que, dans un plan radial quelconque de coupe à travers le mélangeur, toutes les faces des racleurs (4) d'un rotor (5) orientées vers l'intérieur, présentent un rayon de courbure égal à l'entraxe (des axes de rotation) et sont concaves et sont nettoyées par les racleurs (4') d'un arbre (2') voisin.

5. Réacteur/mélangeur suivant la revendication 4, caractérisé en ce que, dans un plan radial de coupe à travers le mélangeur, tous les racleurs (4, 4') présentent des sections congruentes, c.-à-d. exactement superposables, et en ce que dans chaque coupe radiale le nombre de racleurs (respectivement 4 et 4') d'un arbre (2, 2') est égal à l'ordre de symétrie de leur disposition.

6. Réacteur/mélangeur suivant la revendication 5, caractérisé en ce que, dans un plan radial de coupe, les racleurs (4) d'un arbre (2) sont géométriquement superposables aux racleurs (4') d'un arbre voisin (2') à l'aide d'une translation.

7. Réacteur/mélangeur suivant la revendication 5, caractérisé en ce que, dans un plan radial de coupe, les racleurs (4) d'un arbre (2) sont géométriquement superposables aux racleurs (4') d'un arbre voisin (2') à l'aide d'une translation suivie d'une rotation d'un demi-pas de symétrie

$$\varphi_{\frac{t}{2}} = \frac{180°}{n},$$

n étant l'ordre de la symétrie de rotation.

8. Réacteur/mélangeur suivant la revendication 6, caractérisé en ce que le rapport entre le rayon intérieur de l'enveloppe et l'entraxe des axes de rotation est sélectionné comme suit en fonction du nombre de racleurs (4 ou 4') d'un arbre (2 ou 2') dans une coupe radiale :

| Nombre de racleurs | Rapport entre le rayon intérieur de l'enveloppe et l'entraxe |
|---|---|
| 4 | 0,708-1,000 |
| 5 | 0,700-0,703 ou 0,851-1,000 |
| 6 | 0,700-0,816 |
| 7 | 0,700-0,924 |
| 8 | 0,708-1,000 |
| 9 | 0,700-0,722 ou 0,778-1,000 |
| 10 | 0,700-0,786 ou 0,851-1,000 |
| 11 | 0,700-0,849 ou 0,925-1,000 |
| 12 | 0,708-0,913 |
| 13 | 0,700-0,724 ou 0,755-0,976 |
| 14 | 0,700-0,768 ou 0,802-1,000 |
| 15 | 0,700-0,813 ou 0,851-1,000 |
| 16 | 0,708-0,858 ou 0,900-1,000 |
| 17 | 0,700-0,723 ou 0,743-0,903 ou 0,950-1,000 |
| 18 | 0,700-0,757 ou 0,778-0,948 |
| 19 | 0,700-0,791 ou 0,815-0,993 |
| 20 | 0,708-0,826 ou 0,851-1,000 |

9. Réacteur/mélangeur suivant la revendication 6, caractérisé en ce que le rapport entre le rayon intérieur de l'enveloppe et l'entraxe des axes de rotation est sélectionné comme suit en fonction du nombre de racleurs (4 ou 4') d'un arbre (2 ou 2') dans une coupe radiale :

| Nombre de racleurs | Rapport entre le rayon intérieur de l'enveloppe et l'entraxe |
|---|---|
| 5 | 0,700-0,703 |
| 6 | 0,722-0,816 |
| 7 | 0,811-0,924 |
| 8 | 0,904-1,000 |
| 9 | 0,700-0,722 |
| 10 | 0,713-0,786 |
| 11 | 0,768-0,849 |
| 12 | 0,824-0,913 |
| 13 | 0,700-0,724 ou 0,882-0,976 |
| 14 | 0,710-0,786 ou 0,941-1,000 |
| 15 | 0,750-0,813 |
| 16 | 0,790-0,858 |
| 17 | 0,700-0,723 ou 0,831-0,903 |
| 18 | 0,709-0,757 ou 0,873-0,948 |
| 19 | 0,740-0,791 ou 0,915-0,993 |
| 20 | 0,771-0,826 ou 0,958-1,000 |

10. Réacteur/mélangeur suivant la revendication 6, caractérisé en ce que le rapport entre le rayon intérieur de l'enveloppe et l'entraxe des axes de rotation est sélectionné comme suit en fonction du nombre de racleurs (4 ou 4') d'un arbre (2 ou 2') dans une coupe radiale :

| Nombre de racleurs | Rapport entre le rayon intérieur de l'enveloppe et l'entraxe |
|---|---|
| 8 | 0,904-1,000 |
| 12 | 0,824-0,913 |
| 13 | 0,882-0,976 |
| 14 | 0,941-1,000 |
| 16 | 0,790-0,858 |
| 17 | 0,831-0,903 |
| 18 | 0,873-0,948 |
| 19 | 0,915-0,993 |
| 20 | 0,771-0,826 ou 0,958-1,000. |

11. Réacteur/mélangeur suivant la revendication 7, caractérisé en ce que le rapport entre le rayon intérieur de l'enveloppe et l'entraxe des axes de rotation est sélectionné comme suit en fonction du nombre de racleurs (4 ou 4') d'un arbre (2 ou 2') dans une coupe radiale :

| Nombre de racleurs | Rapport entre le rayon intérieur de l'enveloppe et l'entraxe |
|---|---|
| 4 | 0,700-0,840 |
| 5 | 0,700-1,000 |
| 6 | 0,708-1,000 |
| 7 | 0,700-0,717 ou 0,802-1,000 |
| 8 | 0,700-0,798 ou 0,900-1,000 |
| 9 | 0,700-0,879 |
| 10 | 0,708-0,958 |
| 11 | 0,700-0,724 ou 0,764-1,000 |
| 12 | 0,700-0,776 ou 0,822-1,000 |
| 13 | 0,700-0,829 ou 0,881-1,000 |
| 14 | 0,708-0,881 ou 0,940-1,000 |
| 15 | 0,700-0,724 ou 0,748-0,934 |
| 16 | 0,700-0,762 ou 0,789-0,987 |
| 17 | 0,700-0,801 ou 0,830-1,000 |
| 18 | 0,708-0,840 ou 0,872-1,000 |
| 19 | 0,700-0,723 ou 0,739-0,879 ou 0,915-1,000 |
| 20 | 0,700-0,753 ou 0,770-0,918 ou 0,957-1,000 |

12. Réacteur/mélangeur suivant la revendication 7, caractérisé en ce que le rapport entre le rayon intérieur de l'enveloppe et l'entraxe des axes de rotation est sélectionné comme suit en fonction du nombre de racleurs (4 ou 4') d'un arbre (2 ou 2') dans une coupe radiale :

| Nombre de racleurs | Rapport entre le rayon intérieur de l'enveloppe et l'entraxe |
|---|---|
| 4 | 0,741-0,840 |
| 5 | 0,864-1,000 |
| 7 | 0,700-0,717 |
| 8 | 0,716-0,798 |
| 9 | 0,784-0,879 |
| 10 | 0,854-0,958 |
| 11 | 0,700-0,724 ou 0,927-1,000 |
| 12 | 0,711-0,776 |
| 13 | 0,757-0,829 |
| 14 | 0,804-0,881 |
| 15 | 0,700-0,724 ou 0,853-0,934 |
| 16 | 0,710-0,762 ou 0,901-0,987 |
| 17 | 0,744-0,801 ou 0,951-1,000 |
| 18 | 0,780-0,840 |
| 19 | 0,700-0,723 ou 0,816-0,879 |
| 20 | 0,709-0,753 ou 0,852-0,918 |

13. Réacteur/mélangeur suivant la revendication 7, caractérisé en ce que le rapport entre le rayon intérieur de l'enveloppe et l'entraxe des axes de rotation est sélectionné comme suit en fonction du nombre de racleurs (4 ou 4') d'un arbre (2 ou 2') dans une coupe radiale :

| Nombre de racleurs | Rapport entre le rayon intérieur de l'enveloppe et l'entraxe |
|---|---|
| 10 | 0,854-0,958 |
| 11 | 0,927-1,000 |
| 14 | 0,804-0,881 |
| 15 | 0,853-0,934 |
| 16 | 0,901-0,987 |
| 17 | 0,951-1,000 |
| 18 | 0,780-0,840 |
| 19 | 0,816-0,879 |
| 20 | 0,852-0,918 |

**Fig. 1a**

A

B

**Fig. 1c**

Schnitt A – B

5

**Fig. 1b**

4  3  1

2

EP 0 715 882 B1

Fig. 2

Fig. 3

Fig. 4

45'

42' 43'
44'
41'

43
42
44
41

Fig. 5

Fig. 6

Fig. 7

EP 0 715 882 B1

Fig. 8